# EUROPEAN PATENT APPLICATION

(11) **EP 2 506 495 A2**
(43) Date of publication of application: **03.10.2012**
(21) Application number: 11169561.5
(22) Date of filing: 10.06.2011
(51) Int. Cl.: H04L 12/24

(54) **Method and system for managing controllers**

(30) Priority: 01.04.2011 TW 100111553
(71) Applicant: Acer Incorporated, New Taipei City 221 (TW)
(72) Inventor: Chang, Wei-Che, 221 New Taipei City (TW)
(74) Representative: Chamberlain, Alan James

(57) **Abstract**

A method and a system for managing controllers suitable for searching and managing controllers of a plurality of servers on a network segment are provided. One of the servers is taken as a searching engine, and an account and a password of each controller is set therein. The searching engine is used for searching the controllers in the network segment, and using the account and the password of each of the controllers to login the controller for obtaining server information of the server where the controller is belonged. Accordingly, when a searching instruction is received from a client apparatus by the searching engine, the server information of the servers assigned by the searching instruction is provided to the client apparatus.

## Description

### BACKGROUND

### Field of the Invention

The invention relates to a mechanism for managing controllers. Particularly, the invention relates to a method and a system for managing controllers that integrate search and management interfaces of the controller.

### Description of Related Art

An intelligent platform management interface (IPMI) is a new generation of universal interface standard that achieves intelligent hardware management. In an IPMI management platform, a baseboard management controller (BMC) is a core controller, which is used for providing an interface between management software of a control system and platform management hardware to provide functions such as self-monitoring, event recording and control recovery, etc. The BMC is used to monitor physical health features of a server such as temperatures, voltages, fan working states and a power supply, etc.

Generally, when a client apparatus is about to be connected to the BMC to manage the server, a user has to first obtain a network address of the BMC, and inputs the network address of the BMC to specific third-party management software for connecting a management interface of the BMC, so as to manage the server. However, a premise of the above method is that the user memorizes the network addresses of each BMC, and if the user cannot memorize the network address of the BMC to be connected, the connection cannot be established, which is inconvenient in utilization.

### SUMMARY OF THE INVENTION

The invention is directed to a method for managing controllers, which can be used to directly search and manage the controllers.

The invention is directed to a management system, in which one of servers in a network segment is used as a searching engine to obtain and provide server information.

The invention provides a method for managing controllers, suitable for searching and managing controllers on a plurality of servers in a network segment. One of the servers is taken as a searching engine, and an account and a password of the controller of each of the servers is set therein. The searching engine is used for searching the controllers in the network segment, and using the account and the password of each of the controllers to login the controller for obtaining server information of the server where the controller is belonged. Accordingly, a searching instruction is received from a client apparatus by the searching engine to provide the server information of the servers assigned by the searching instruction to the client apparatus.

In an embodiment of the invention, in the step of using the searching engine to search the controllers in the network segment, and using the account and the password of each of the controllers to login the controller for obtaining the server information of the server where the controller is belonged, the searching engine searches the controllers in the network segment to obtain the server information every a predetermined time.

In an embodiment of the invention, in the step of using the searching engine to search the controllers in the network segment, and using the account and the password of each of the controllers to login the controller for obtaining the server information of the server where the controller is belonged, the searching engine stores the obtained server information in a database.

In an embodiment of the invention, before the step of receiving the searching instruction from the client apparatus by the searching engine to provide the server information of the servers assigned by the searching instruction to the client apparatus, the client apparatus uses a browser to receive a searching condition, and transmits the searching instruction comprising the searching condition to the searching engine.

In an embodiment of the invention, in the step of receiving the searching instruction from the client apparatus by the searching engine to provide the server information of the servers assigned by the searching instruction to the client apparatus, the searching engine searches the database for the server information of the servers matched to the searching condition according to the searching condition in the searching instruction, and transmits the server information of the servers to the client apparatus.

In an embodiment of the invention, after the step of receiving the searching instruction from the client apparatus by the searching engine to provide the server information of the servers assigned by the searching instruction to the client apparatus, the client apparatus displays the server information of the servers on the browser. Then, the client apparatus receives a select instruction of one of the server information displayed on the browser, and displays a management interface of the controller corresponding to the server information selected by the select instruction.

In an embodiment of the invention, the server information includes one of a network address of the server in the network segment, a manufacturer name and a model name of the server, or combinations thereof.

The invention provides a management system including a client apparatus and a plurality of servers. The client apparatus sends a searching instruction, and the servers are located in a network segment, where each of the servers includes a controller. One of the servers is taken as a searching engine, and an account and a password of the controller of each of the servers is set therein. The searching engine searches the controllers in the network segment, and uses the account and the password of each of the controllers to login the controller for obtaining server information of the server where the controller is belonged. In this way, the searching engine receives the searching instruction from the client apparatus, and provides the server information of the servers assigned by the searching instruction to the client apparatus.

In an embodiment of the invention, the searching engine searches the controllers in the network segment to obtain the server information every a predetermined time. Moreover, the searching engine stores the obtained server information in a database.

In an embodiment of the invention, before the searching engine receives the searching instruction from the client apparatus, the client apparatus uses a browser to receive a searching condition, and transmits the searching instruction comprising the searching condition to the searching engine. The searching engine searches the database for the server information of the servers matched to the searching condition according to the searching condition in the searching instruction, and transmits the server information of the servers to the client apparatus. Then, the client apparatus displays the server information of the servers on the browser.

In an embodiment of the invention, the client apparatus receives a select instruction of one of the server information displayed on the browser, and displays a management interface of the controller corresponding to the server information selected by the select instruction.

According to the above descriptions, in the invention, a server in the network segment is taken as the searching engine to periodically search the controllers in the network segment to obtain the server information, and search the server information according to the search instruction of the client apparatus and transmit the server information to the client apparatus. In this way, the client apparatus can be directly connected to the searching engine through the browser to search the controllers, and can be connected to the management interface of the selected controller.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram of a management system according to an embodiment of the invention.

FIG. 2 is a flowchart illustrating a method for managing controllers according to an embodiment of the invention.

FIG. 3 is a flowchart illustrating a method for managing controllers according to another embodiment of the invention.

FIG. 4 is a flowchart illustrating a method for managing controllers adapted to a client apparatus according to an embodiment of the invention.

FIG. 5 is a schematic diagram of a browser interface according to an embodiment of the invention.

FIG. 6 is a schematic diagram of a searching result according to an embodiment of the invention.

### DETAILED DESCRIPTION OF DISCLOSED EMBODIMENTS

Generally, before connecting a management interface of a controller, a network address of the controller has to be known in advance, and the network address is used to connect the management interface, which is inconvenient in management. Therefore, the invention provides a method and a system for managing controllers, by which a browser of a client apparatus can be used to search the controller to be connected, so as to improve utilization convenience. In order to fully convey the spirit of the invention, embodiments are provided below for descriptions.

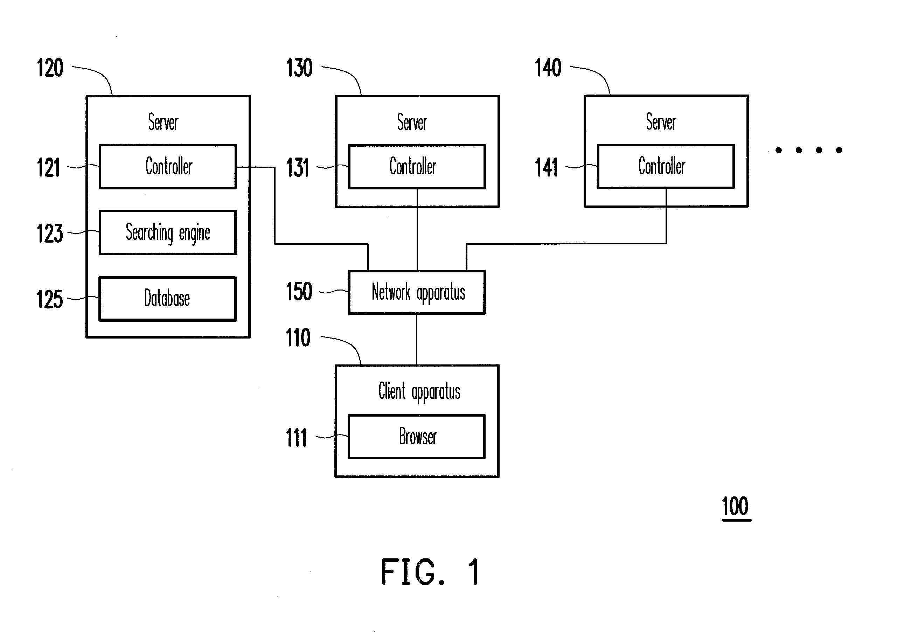

FIG. 1 is a schematic diagram of a management system according to an embodiment of the invention. Referring to FIG. 1, the management system 100 includes a client apparatus 110 and a plurality of servers (only a server 120, a server 130 and a server 140 are taken as an example, though the invention is not limited thereto). The server 120, the server 130 and the server 140 are located in a same network segment, and respectively include a controller 121, a controller 131 and a controller 141. The client apparatus 110, the server 120, the server 130 and the server 140 are, for example, communicated through a network apparatus 150. Here, the network apparatus 150 is, for example, a switch or a hub. The controller 121, the controller 131 and the controller 141 are, for example, baseboard management controllers (BMC) or active management technology (AMT) modules of an Intel vPro platform.

In the present embodiment, the server 120 is taken as a searching engine, for example, a searching engine 123 is installed in the server 120. Accounts and passwords of the controller 121, the controller 131 and the controller 141 are set in the searching engine 123. Moreover, the searching engine 123 can search the controller 121, the controller 131 and the controller 141 in the network segment, and use the accounts and the passwords of the controllers to respectively login the controller 121, the controller 131 and the controller 141 for obtaining server information of the servers where the controllers are belonged. Moreover, the searching engine 123 receives a searching instruction from the client apparatus 110, and provides the server information of the servers assigned by the searching instruction to the client apparatus 110.

The server 120 further includes a database 125, which is used for storing the server information of the servers corresponding to the controllers searched by the searing engine 123 in the network segment. In the present embodiment, the server information includes one of a network address of the server in the network segment, a manufacturer name and a model name of the server, or combinations thereof. Moreover, the server information further includes system environment information of each server monitored by the corresponding controller, for example, a fan speed, a system temperature, and operation information of a central processing unit (CPU), etc.

The client apparatus 100 is used to send a searching instruction. In the present embodiment, a browser 111 of the client apparatus 110 is used to receive a searching condition set by the user, and the searching instruction including the searching condition is transmitted to the searching engine 123 through the network apparatus 150. Moreover, the browser 111 further displays the server information transmitted back by the searching engine 123. In addition, the client apparatus 110 further receives a select instruction of one of the server information displayed on the browser 111 from the user, and displays a management interface of the controller corresponding to the server information selected by the select instruction. In this way, the user can use the client apparatus 110 to directly connect the management interface of the selected controller through the browser 111, so as to manage functions of the controller.

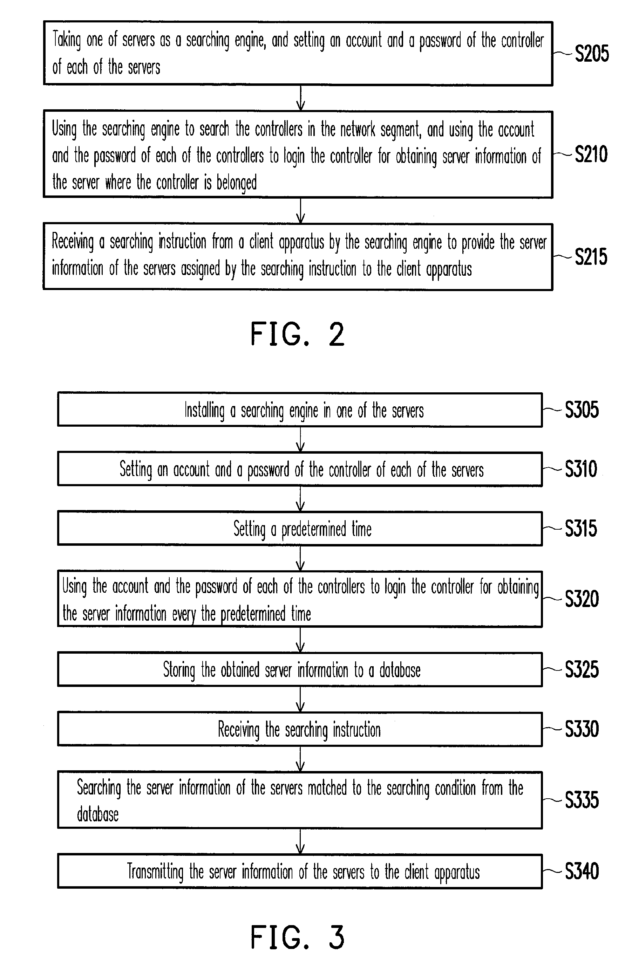

Steps of the method for managing the controllers are described below with reference of the aforementioned management system 100. FIG. 2 is a flowchart illustrating a method for managing controllers according to an embodiment of the invention. The method of the present embodiment is adapted to search and manage controllers of a plurality of servers on a network segment.

Referring to FIG. 1 and FIG. 2, in step S205, one of the server 120, the server 130 and the server 140 is taken as a server used for searching, for example, the searching engine 123 is installed in the server 120, and accounts and passwords of the controller 121, the controller 131 and the controller 141 are set in the searching engine 123.

Then, in step S210, the searching engine 123 searches the controllers in the network segment, and uses the account and the password of each of the controllers to login the controller for obtaining server information of the server where the controller is belonged. Namely, each time when a server is added to the network segment, the searching engine 123 sets the account and the password of the controller in the server in advance, and then uses the accounts and the passwords to login the controllers for obtaining server information of the servers.

Then, in step S215, the searching engine 123 receives a searching instruction from the client apparatus 110, and provides the server information of the servers assigned by the searching instruction to the client apparatus 110. For example, the searching instruction assigns a network segment, and the searching engine 123 searches the server information of the servers in the network segment after receiving the searching instruction, and then transmits the server information to the client apparatus 110.

Moreover, in order to accelerate the searching speed and maintain a latest state of the server data, the searching engine 123 searches the controllers in the network segment to obtain the server information every a predetermined time, and stores the obtained server information to the database 125. In this way, the searching engine 123 can directly search the database 125 without searching the whole network segment, so as to save a searching time. Another embodiment is provided below for description.

FIG. 3 is a flowchart illustrating a method for managing controllers according to another embodiment of the invention. Referring to FIG. 3, in step S305, the searching engine 123 is installed in one of the servers (for example, the server 120). Then, in step S310, the searching engine 123 sets the account and the password of the controller of each of the servers.

Then, in step S315, the searching engine 123 sets a predetermined time. In step S320, the searching engine 123 uses the account and the password of each controller to login the controller for obtaining server information of the server where the controller is belonged every the predetermined time. For example, besides obtaining the network addresses of the servers where the controllers are belonged, the searching engine 123 further logins each controller, and obtains the manufacturer name and the model name of the corresponding server from a field replaceable unit (FRU) of the controller through an intelligent platform management interface (IPMI) standard, and further obtains the system environment information of the server, for example, the fan speed, the system temperature and the operation information of the CPU, etc.

In step S325, the searching engine 123 stores the obtained server information to the database 125. Namely, the searching engine 123 sets a timing and a frequency of automatic search to periodically update a searching result and store it to the database 125. In this way, the searching engine 123 can directly search the database 125 in future without searching the whole network segment, so as to save a searching time.

Then, in step S330, the searching engine 123 receives a searching instruction from the client apparatus 110. Then, in step S335, the searching engine 123 first searches the database 125 for the server information of the servers matched to the searching condition. If the matched server information is not found in the database 125, the searching engine 123 further searches the whole network segment to find the server information matched to the searching condition. Moreover, an instant searching function can be set on the browser 111 of the client apparatus 110, and when the instant searching function of the browser 111 is enabled, the searching engine 123 searches the whole network segment to find the server information matched to the searching condition. Then, in step S340, the searching engine 123 transmits the searched server information to the client apparatus 110.

In the client apparatus 110, the browser 111 can be used to input the searching instruction, and the searching engine 123 searches the server information according to the searching instruction. Another embodiment is provided below to describe a method for managing controllers adapted to the client apparatus.

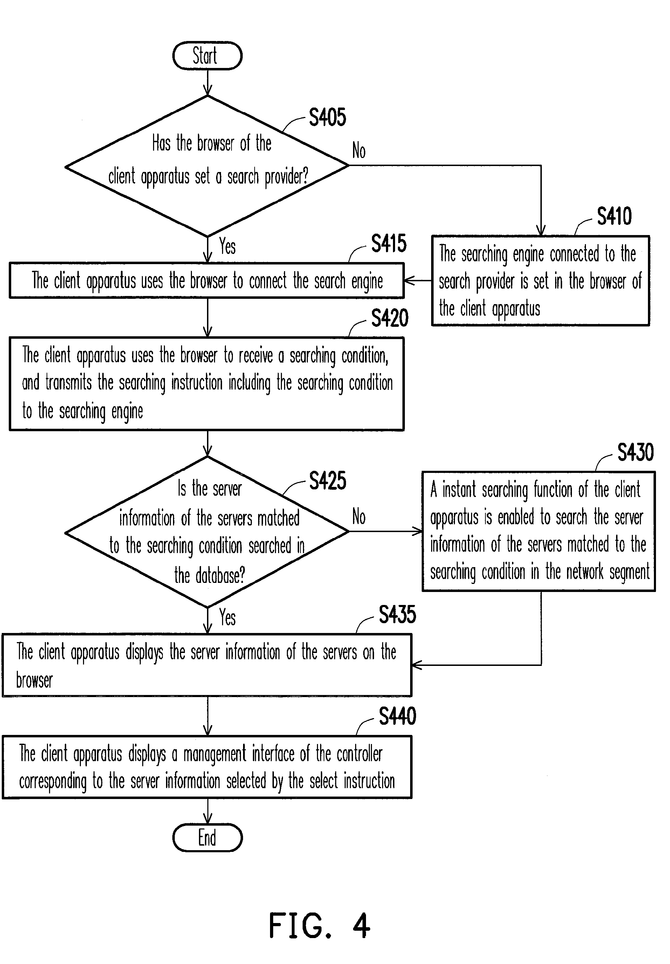

FIG. 4 is a flowchart illustrating a method for managing controllers adapted to a client apparatus according to an embodiment of the invention. Referring to FIG. 1 and FIG. 4, in step S405, the client apparatus 110 checks whether the browser 111 has set a search provider to connect the searching engine 123. If it is set that the search provider is connected to the searching engine 123 in the browser 111, a step S415 is directly executed, by which the client apparatus 110 uses the search provider in the browser 111 to connect the search engine 123. If the search provider is still not set in the browser 111, a step S410 is executed, by which the searching engine (for example, the searching engine 123) connected to the search provider is set in the browser 111 of the client apparatus 110. Then, the step S415 is executed.

Then, in step S420, the client apparatus 110 uses the browser 111 to receive a searching condition, and transmits the searching instruction including the searching condition to the searching engine 123. After the searching engine 123 searches the server information and transmits the server information back to the client apparatus 110, in step S435, the client apparatus 110 displays the server information of the servers on the browser 111.

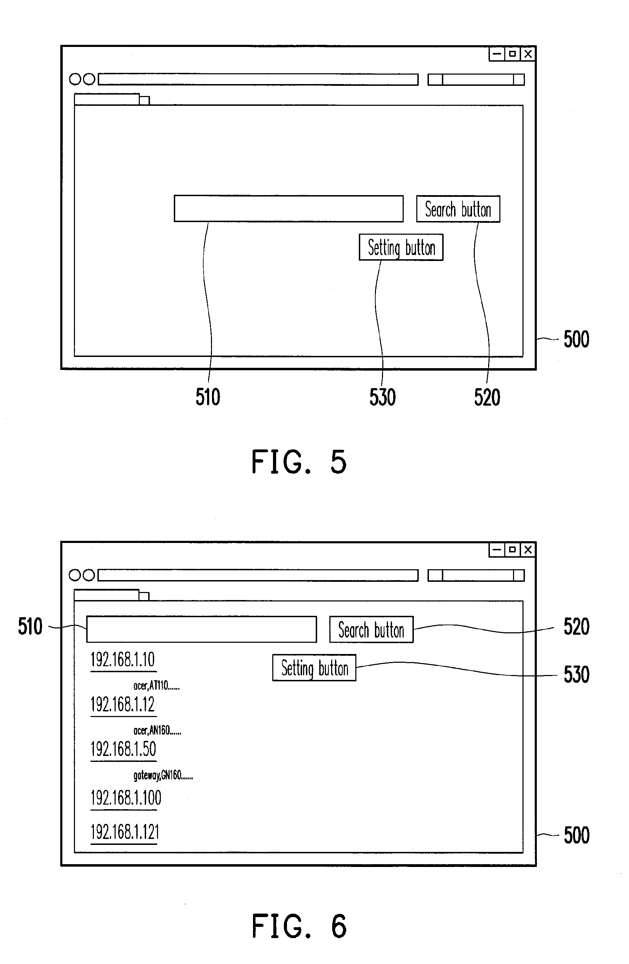

For example, FIG. 5 is a schematic diagram of a browser interface according to an embodiment of the invention. Referring to FIG. 5, the browser interface 500 includes a search row 510, a search button 520 and a setting button 530. The search row 510 provides the user to input the searching condition. The user can input the required searching condition in the search row 510. The searching condition is, for example, a keyword taken from any one of the network address, the manufacturer name and the model name of the servers to be searched. The search button 520 is used to connect the searching engine 123 to perform the searching operation.

For example, the user inputs a network segment "192.168.1" to be searched into the search row 510, and clicks the search button 520 to send the search instruction to the searching engine 123 of the server 120 to start searching, and transmits the searched server information back to the client apparatus 110.

FIG. 6 is a schematic diagram of a searching result according to an embodiment of the invention. Referring to FIG. 6, the user clicks the search button 520 to search, and after the search operation is completed, the browser interface 500 displays a searching result as that shown in FIG. 6. In FIG. 6, the browser interface 500 displays five batches of server information matched to the network segment "192.168.1", which are respectively "192.168.1.10", "192.168.1.12", "192.168.1.50", "192.168.1.100", and "192.168.1.121". The searching engine 123 further searches the manufacturer names and the model names corresponding to the network addresses "192.168.1.10", "192.168.1.12", "192.168.1.50". Namely, the searching engine 123 sets the network addresses "192.168.1.10", "192.168.1.12", "192.168.1.50" and the accounts and the passwords of the corresponding controllers in advance, so that the searching engine 123 can directly login the controllers to obtain the manufacturer names and the model names from the FRUs.

Moreover, the setting button 530 is used to activate a setting interface of the account and the password of the controller. For example, when the user clicks the setting button 530, the setting interface is activated for the user to add the accounts and passwords of the controller 121, the controller 131 and the controller 141, and the searching engine 123 is connected to record the setting data in the searching engine 123, so as to facilitate periodically logging in the controllers to obtain the server information.

Referring to FIG. 4, in step S425, if the server information matched to the searching condition is not found from the database 125, a step S430 is executed, by which the instant searching function of the client apparatus 110 is enabled to search the server information of the servers matched to the searching condition in the network segment. Then, the step S435 is executed, by which the client apparatus 110 displays the server information of the servers on the browser 111.

Then, in step S440, the client apparatus 110 receives a select instruction of one of the server information displayed on the browser 111, and displays a management interface of the controller corresponding to the server information selected by the select instruction. For example, in FIG. 6, when the user selects the network address "192.168.1.10" in the browser interface 500, the browser 111 can connect the management interface of the controller corresponding to the network address "192.168.1.10".

In summary, in the invention, the searching engine is installed in one of the servers in the network segment, and the browser of the client apparatus is used to connect the searching engine, so as to search the controllers through the search engine and connect the management interface of the controller required to be managed. In this way, the invention integrates the search and management interfaces of the controller, so that utilization convenience is improved. Moreover, the searching engine can periodically login the controllers to obtain the server information, and store the obtained server information to the database. Therefore, the searching engine can directly search the database after receiving the searching instruction without searching the whole network segment, so as to save a searching time.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for managing controllers, for searching and managing controllers (121-131-141) on a plurality of servers (120-130-140) in a network segment, the method for managing controllers (121-131-141) comprising:
taking (S205) one of the servers (120-130-140) as a searching engine (123), and setting an account and a password of the controller (121-131-141) of each of the servers (120-130-140);
using (S210) the searching engine (123) to search the controllers (121-131- 141) in the network segment, and using the account and the password of each of the controllers (121-131-141) to login the controller (121-131-141) for obtaining server information of the server (120-130-140) where the controller (121-131-141) is belonged; and
receiving (S215) a searching instruction from a client apparatus (110) by the searching engine (123) to provide the server information of the servers (120-130-140) assigned by the searching instruction to the client apparatus (110).

2. The method for managing the controllers as claimed in claim 1, wherein the step (S210) of using the searching engine (123) to search the controllers (121-131-141) in the network segment, and using the account and the password of each of the controllers (121-131-141) to login the controller (121-131-141) for obtaining the server information of the server (120-130-140) where the controller (121-131-141) is belonged comprises:
searching the controllers (121-131-141) in the network segment to obtain the server information every a predetermined time by the searching engine (123).

3. The method for managing the controllers as claimed in claim 1 or 2, wherein the step of using the searching engine (123) to search the controllers (121 -131-141) in the network segment, and using the account and the password of each of the controllers (121-131-141) to login the controller (121-131-141) for obtaining the server information of the server (120-130-140) where the controller (121-131-141) is belonged comprises:
storing the obtained server information in a database (125) by the searching engine (123).

4. The method for managing the controllers as claimed in claim 3, wherein before the step of receiving the searching instruction from the client apparatus (110) by the searching engine (123) to provide the server information of the servers (120-130-140) assigned by the searching instruction to the client apparatus (110), the method further comprises:
using a browser (111) to receive a searching condition and transmitting the searching instruction comprising the searching condition to the searching engine (123) by the client apparatus (110).

5. The method for managing the controllers as claimed in claim 4, wherein the step of receiving the searching instruction from the client apparatus (110) by the searching engine (123) to provide the server information of the servers (120-130-140) assigned by the searching instruction to the client apparatus (110) comprises:
searching the database (125) for the server information of the servers (120-130-140) matched to the searching condition according to the searching condition in the searching instruction by the searching engine (123); and
transmitting the server information of the servers (120-130-140) to the client apparatus (110).

6. The method for managing the controllers as claimed in claim 4 or 5, wherein after the step of receiving the searching instruction from the client apparatus (110) by the searching engine (123) to provide the server information of the servers (120-130-140) assigned by the searching instruction to the client apparatus (110), the method further comprises:
displaying the server information of the servers (120-130-140) on the browser (111) by the client apparatus (110).

7. The method for managing the controllers as claimed in claim 6, wherein after displaying the server information of the servers (120-130-140) on the browser (111) by the client apparatus (110), the method further comprises:
receiving a select instruction of one of the server information displayed on the browser (111) by the client apparatus (110); and
displaying a management interface of the controller (121-131-141) corresponding to the server information selected by the select instruction.

8. The method for managing the controllers as claimed in any one of claims 1 to 7, wherein the server information comprises one of a network address of the server (120-130-140) in the network segment, a manufacturer name and a model name of the server (120-130-140), or combinations thereof.

9. A management system, comprising:
a client apparatus (110), for sending a searching instruction; and
a plurality of servers (120-130-140), located in a network segment, wherein each of the servers (120-130-140) comprises a controller (121-131-141),
wherein one of the servers (120-130-140) is taken as a searching engine (123), and an account and a password of the controller (121-131-141) of each of the servers (120-130-140) is set therein, the searching engine (123) searches the controllers (121-131-141) in the network segment, and uses the account and the password of each of the controllers (121-131-141) to login the controller (121-131-141) for obtaining server information of the server (120-130-140) where the controller (121-131-141) is belonged, and receives the searching instruction from the client apparatus (110) to provide the server information of the servers (120-130-140) assigned by the searching instruction to the client apparatus (110).

10. The management system as claimed in claim 9, wherein the searching engine (123) searches the controllers (121-131-141) in the network segment to obtain the server information every a predetermined time.

11. The management system as claimed in claim 9 or 10, wherein the searching engine (123) stores the obtained server information in a database (125).

12. The management system as claimed in claim 11, wherein the client apparatus (110) uses a browser (111) to receive a searching condition, and transmits the searching instruction comprising the searching condition to the searching engine (123).

13. The management system as claimed in claim 12, wherein the searching engine (123) searches the database (125) for the server information of the servers (120-130-140) matched to the searching condition according to the searching condition in the searching instruction, and transmits the server information of the servers (120-130-140) to the client apparatus (110).

14. The management system as claimed in claim 12 or 13, wherein the client apparatus (110) displays the server information of the servers (120-130-140) on the browser (111).

15. The management system as claimed in claim 14, wherein the client apparatus (110) receives a select instruction of one of the server information displayed on the browser (111), and displays a management interface of the controller (121-131-141) corresponding to the server information selected by the select instruction.
